# EUROPÄISCHE PATENTSCHRIFT

(11) **EP 2 803 469 B1**
(45) Veröffentlichungstag und Bekanntmachung des Hinweises auf die Patenterteilung: **04.10.2017**
(21) Anmeldenummer: 14001717.9
(22) Anmeldetag: 15.05.2014
(51) Int. Cl.: B29C 49/48, B29C 49/56, B29C 49/78

(54) **BLASFORMMASCHINE MIT SEPARATER DRUCKKISSENANSTEUERUNG**
BLOW-MOULDING MACHINE WITH SEPARATE PRESSURE PAD DEVICE
MACHINE DE FORMAGE PAR SOUFFLAGE DOTÉE D'UNE COMMANDE SÉPARÉE DE COUSSIN DE PRESSION

(30) Priorität: 15.05.2013 DE 102013104995
(43) Veröffentlichungstag der Anmeldung: 19.11.2014
(73) Patentinhaber: Krones AG, 93073 Neutraubling (DE)
(72) Erfinder: FINGER, Dieter, 93073 Neutraubling (DE); LEX, Peter, 93073 Neutraubling (DE); SPITZER, Thomas, 93073 Neutraubling (DE)
(74) Vertreter: Bittner, Bernhard

(56) Entgegenhaltungen:
- EP-A1- 2 475 510
- DE-A1-102008 018 785
- DE-A1-102011 052 865
- US-A- 6 099 286

## Beschreibung

Die vorliegende Erfindung bezieht sich auf eine Vorrichtung und ein Verfahren zum Umformen von Kunststoffvorformlingen in Kunststoffbehältnisse und insbesondere in Kunststoffflaschen. Derartige Vorrichtungen und Verfahren sind aus dem Stand der Technik seit längerem bekannt. Dabei werden üblicherweise erwärmte Kunststoffvorformlinge in Blasstationen durch Beaufschlagung mit Druckluft zu Kunststoffflaschen umgeformt. Zu diesem Zweck werden die Kunststoffvorformlinge in eine Blasform eingebracht, diese anschließend geschlossen und in diesem geschlossenen Zustand erfolgt die Expansion der Kunststoffvorformlinge. Ein Problem bei dieser Umformung ist dabei oft der Übergang der beiden Blasformteile, beispielsweise Blasformhälften, der bei der Herstellung zu nicht gewollten Nähten des fertigen Behältnisses führen kann.

Im Stand der Technik ist es daher bekannt, bei derartigen Umformungsstationen sogenannte Druckkissen einzusetzen, welche während der Expansion des Kunststoffvorformlings die beiden Blasformteile bzw. Blasformhälften aufeinander zu pressen. Bei einer aus dem internen Stand der Technik der Anmelderin bekannten Vorgehensweise wird dabei das Druckkissen mit dem gleichen Druck beaufschlagt, der während dem Blasvorgang auch in das Behältnis geführt wird bzw. der darin vorherrscht. Der Druckverlauf in den Druckkissen entspricht damit hier dem Blasdruckverlauf. Dadurch wird das besagte Druckkissen immer nur mit dem Druck beaufschlagt, der gerade zum formspaltlosen Zuhalten der Blasform erforderlich ist. Eine darüber hinaus gehende Belastung des Formträgers tritt nicht auf. Aus der DE 10 2011 052865 A1 ist eine Vorrichtung zum Umformen von Kunststoffvorformlingen zu Kunststoffbehältnissen mit einer Druckkissenanordnung bekannt. Die US 6,099,286 beschreibt einen Blasformträger mit einer Luftflusskompensation. Die DE 10 2008 018 785 A1 beschreibt eine Vorrichtung zur Blasformung von Behältern wobei eine Blasform gegenüber ihrem Träger pneumatisch vorgespannt ist.

Weiterhin ist es aus dem internen Stand der Technik der Anmelderin bekannt, eine separate Druckkissenansteuerung vorzusehen, welche bewirkt, dass das Druckkissen bereits vor dem Blasvorgang mit einem Druck beaufschlagt wird, der sogar höher ist, als der Fertigblasdruck. Der Druckkissendruck wird dabei während des gesamten Blasablaufs konstant gehalten. Diese Ausführung ist insbesondere bei großvolumigen Behältnissen relevant, bei denen die projizierte Fläche eine so große Kraft aufbauen würde, dass der Fertigblasdruck nicht mehr ausreicht, um die Formen zu- bzw. aneinanderzuhalten. Der Nachteil dieser Vorgehensweise besteht in einem höheren Energieverbrauch und auch darin, dass die Belastung des Formträgers sehr hoch ist.

Bei einer weiteren aus dem internen Stand der Technik der Anmelderin bekannten Vorgehensweise wird das Druckkissen mit einem geringeren Druck im Vergleich zu dem Fertigblasdruck betätigt. In diesem Falle spricht man auch von einer Druckkissenminderung. Das Druckkissen wird bereits vor dem Blasvorgang mit Druck beaufschlagt. Der Druckkissendruck wird weiterhin während des gesamten Blasablaufs konstant gehalten. Diese Ausführung eignet sich insbesondere bei kleinvolumigen Behältnissen, wobei hiermit auch die Belastung des Formträgers signifikant reduziert werden kann.

Bei einem weiteren aus dem Stand der Technik bekannten Verfahren, bei dem der Druckverlauf des Druckkissens genau dem Blasdruckverlauf entspricht, beginnt sich das Druckkissen erst dann zu bewegen, wenn der Ausformvorgang des Behältnisses schon eingesetzt hat. Dies kann jedoch dazu führen, dass sich dann im Behältnis eine Naht bildet, da der Formspalt noch nicht geschlossen ist.

Der vorliegenden Erfindung liegt daher die Aufgabe zugrunde, einerseits weitgehend möglich eine Flaschennaht zu verhindern und daneben auch eine schonende Bewegung der Formhälften und eine geringere Belastung des Formträgers zu erreichen. Diese Aufgaben werden erfindungsgemäß durch die Gegenstände der unabhängigen Ansprüche erreicht. Vorteilhafte Ausführungsformen und Weiterbildungen sind Gegenstand der Unteransprüche.

Bei einem erfindungsgemäßen Verfahren zum Umformen von Kunststoffvorformlingen und insbesondere zum Umformen von Kunststoffvorformlingen in Kunststoffbehältnisse, wie insbesondere, aber nicht ausschließlich, Kunststoffflaschen, werden die Kunststoffvorformlinge in eine Blasform eingebracht und durch die Beaufschlagung mit einem fließfähigen Medium,
welches in einen Innenraum der Kunststoffvorformlinge eingebracht wird, expandiert. Weiterhin weist die Blasform wenigstens zwei Seitenteile auf, welche während der Expansion der Kunststoffvorformlinge in ihrem Inneren einen Hohlraum ausbilden, innerhalb dessen die Kunststoffbehältnisse expandiert werden. Dabei sind weiterhin diese Seitenteile jeweils an Seitenteileträgern angeordnet, welche zum Öffnen und Schließen der Blasform bezüglich einander bewegt werden. Weiterhin weist wenigstens eine Anordnung aus einem Seitenteilträger und dem daran angeordneten Seitenteil ein durch ein gasförmiges Medium beaufschlagbares Expansionselement auf, welches bei Beaufschlagung mit dem gasförmigen Medium bewirkt, dass ein Seitenteil auf das andere Seitenteil zugestellt wird. Weiterhin werden während der Expansion der Kunststoffvorformlinge diese mit wenigstens zwei unterschiedlichen Druckniveaus beaufschlagt und diese Beaufschlagung des Kunststoffvorformlings setzt zu einem vorgegebenen Zeitpunkt ein.

Erfindungsgemäß wird das Expansionselement während eines ersten zeitlichen Abschnitts des Expansionsvorgangs mit einem ersten Druck beaufschlagt und während eines zweiten zeitlichen Abschnitts, der zeitlich nach dem ersten Abschnitt liegt, mit einem zweiten Druck, der größer ist als der erste Druck, wobei der erste Druck bevorzugt wenigstens zeitweise von dem momentanen Druck, mit dem der Kunststoffvorformling beaufschlagt wird, abweicht.

Dies bedeutet, dass der erste Druck betrachtet in einem vorgegebenen Zeitfenster von dem Druck, mit dem die Kunststoffvorformlinge in diesem Zeitfenster beaufschlagt werden, abweicht. Bevorzugt liegt dieser Druck in diesem Zeitfenster höher als der Druck, mit dem der Kunststoffvorformling beaufschlagt wird. Bevorzugt wird das Expansionselement bereits mit Druck beaufschlagt, noch bevor der Kunststoffvorformling mit Druck beaufschlagt wird.

Bevorzugt ist der Druck, mit dem das Expansionselement beaufschlagt wird, stets größer oder gleich dem Druck, mit dem der Kunststoffvorformling beaufschlagt wird. Andererseits liegt jedoch bevorzugt der Druck, mit dem das Expansionselement beaufschlagt wird, wenigstens zeitweise auch unter dem maximalen Druck mit dem der Kunststoffvorformling beaufschlagt wird.

Damit liegt der zweite zeitliche Abschnitt nach dem vorgegebenen Zeitpunkt und auch der erste zeitliche Abschnitt liegt bevorzugt nach dem vorgegebenen Zeitpunkt. Unter dem vorgegebenen Zeit wird dabei hier derjenige Zeitpunkt verstanden, zu dem der Blasvorgang einsetzt bzw. mit der Druckbeaufschlagung der Kunststoffvorformlinge begonnen wird.

Bei dem Expansionselement handelt es sich insbesondere um das oben beschriebene Druckkissen. Dabei kann es sich um einen mit einem gasförmigen Medium und insbesondere mit Luft beaufschlagbaren Raum handeln, der sich aufgrund dieser Beaufschlagung zumindest geringfügig ausdehnt und so das eine Seitenteil auf das andere Seitenteil zubewegt bzw. zuspannt. Auf diese Weise werden vorteilhaft die beiden Seitenteile fester aneinander gepresst, um so das Entstehen von Nähten zu verhindern, bzw. zu verringern. Dabei kann dieses Expansionselement vorteilhaft in einem Bereich zwischen dem Seitenteilträger und dem diesem Seitenteilträger zugeordneten Seitenteil der Blasform angeordnet sein. Dabei wäre es zusätzlich noch möglich, dass Trägerschalen vorgesehen sind, an denen wiederum die Seitenteile angeordnet sind. Das Expansionselement ist dabei bevorzugt zwischen dem Seitenteilträger und der Trägerschale angeordnet, es wäre jedoch auch eine Anordnung zwischen der Trägerschale und dem jeweiligen Seitenteil der Blasform denkbar.

Bevorzugt werden die Kunststoffvorformlinge während ihrer Expansion transportiert. Besonders bevorzugt werden die Kunststoffvorformlinge während ihrer Expansion entlang einer Kreisbahn transportiert. Bei einem weiteren vorteilhaften Verfahren werden die Kunststoffvorformlinge zusätzlich gedehnt, indem besonders bevorzugt in die Kunststoffvorformlinge ein stangenartiger Körper, wie eine Reckstange, eingeführt wird, der die Kunststoffvorformlinge zumindest teilweise während des Expansionsvorgangs in deren Längsrichtung dehnt. Bei einem weiteren vorteilhaften Verfahren werden wenigstens zwei, insbesondere drei unterschiedliche Druckniveaus eingesetzt, um die Kunststoffvorformlinge zu expandieren. Dabei ist es möglich, dass die Kunststoffvorformlinge zunächst mit einem Vorblasdruck beaufschlagt werden, anschließend mit einem Zwischenblasdruck und schließlich mit einem Fertigblasdruck.

Bei einem weiteren vorteilhaften Verfahren ist ein derartiges Expansionselement lediglich zwischen einem der Seitenteile und dem zugehörigen Seitenträgerteil angeordnet, nicht jedoch zwischen dem jeweils anderen Seitenteil und dem betreffenden anderen Seitenträgerteil.

Bei einer weiteren vorteilhaften Ausführungsform ist ein Seitenteil gegenüber dem anderen um eine vorgegebene Achse schwenkbar. Vorteilhaft handelt es sich hierbei um eine Achse, welche senkrecht zu einer Transportebene der Kunststoffvorformlinge steht. Insbesondere handelt es sich dabei um eine Schwenkachse, welche vertikal verläuft.

Bei einem weiteren vorteilhaften Verfahren wird der besagte Hohlraum nicht nur durch die Seitenteile, sondern auch durch ein Bodenteil der Blasform abgeschlossen.

Bei einem weiteren vorteilhaften Verfahren werden die beiden Seitenteile miteinander verriegelt. Dabei kann ein Verriegelungsmechanismus vorgesehen sein, der zumindest zeitweise während des Expansionsvorgangs die beiden Seitenteile miteinander verriegelt.

Bei einem vorteilhaften Verfahren ist der erste Druck geringer als der der zweite Druck. Dieses bedeutet, dass das Expansionselement, das heißt das Druckkissen, zunächst mit einem geringeren Druck und anschließend - insbesondere während des Expansionsvorgangs mit einem höheren Druck beaufschlagt wird.

Dabei ist es möglich, dass der Druck kontinuierlich ansteigt, es wäre jedoch auch möglich, dass in zwei unterschiedlichen Druckstufen der Druck zugeführt wird. Vorteilhaft ist der zweite Druck wenigstens doppelt so groß wie der erste Druck, bevorzugt wenigstens dreimal so groß, bevorzugt wenigstens viermal so groß.

Dabei ist es möglich, dass der erste Druck zunächst konstant gehalten wird, bevor der zweite Druck, das heißt der höhere Druck, einsetzt.

Bei einem weiteren vorteilhaften Verfahren wird das Expansionselement bereits vor dem Beaufschlagen des Kunststoffvorformlings selbst mit Druck beaufschlagt. Dieses bedeutet, dass im Gegensatz zu aus dem Stand der Technik bekannten Verfahren das Expansionselement bzw. Druckkissen bereits mit Druck beaufschlagt wird, noch bevor der Kunststoffvorformling selbst mit Druck beaufschlagt wird. Dabei ist es vorteilhaft möglich, dass bereits vor dem Blasvorgang das Expansionselement mit einem vorzugsweise geringen und besonders bevorzugt konstanten Druck beaufschlagt wird, der die beiden Seitenteile bzw. Formhälften sanft zusammenfährt bzw. zusammendrückt.

Weiterhin ist es denkbar, dass der Druck, mit dem das Expansionselement beaufschlagt wird, wenigstens zeitweise an den Beaufschlagungsdruck für die Kunststoffvorformlinge angepasst wird. So ist es denkbar, dass, sobald der Blasdruck diesen bereits anstehenden Druck übersteigt, der Druckverlauf in dem Expansionselement dem Blasdruckverlauf folgt, sodass nicht die Gefahr besteht, dass sich beim Ansteigen des Blasdrucks wieder ein Formspalt ergibt. Vorteilhaft wird damit auch wenigstens zeitweise ein Druck für das Expansionselement an einen Druck für die Beaufschlagung der Kunststoffvorformlinge angepasst. Es wäre jedoch auch denkbar, dass der Druck den Beaufschlagungsdruck für die Kunststoffvorformlinge gering, z.B. um bis zu 2 bar, übersteigt.

So wird bevorzugt das Expansionselement zunächst mit einem geringeren Druck beaufschlagt, um die Formträger bzw. die Blasstation nicht unnötig belasten zu müssen und anschließend bevorzugt der Blasdruck zur Ansteuerung des Expansionselements zugeschaltet. Vorteilhaft kann hierzu eine Oder-Schaltung verwendet werden, welche unten im Detail beschrieben ist.

Diese hier beschriebene Umschaltung zwischen den beiden Druckniveaus für das Expansionselement kann dabei auch über "digital schaltende" Pneumatikventile erfolgen.

Bei einem weiteren bevorzugten Verfahren liegt der erste Druck zwischen 2 bar und 25 bar, bevorzugt zwischen 3 bar und 20 bar, bevorzugt zwischen 3 bar und 15 bar und besonders bevorzugt zwischen 4 bar und 10 bar. Dieses Druckniveau hat sich als besonders geeignet erwiesen, um ohne übermäßige Belastung der Blasstation bzw. der Seitenteilträger ein genügendes Zusammenführen der Seitenteile der Blasform zu ermöglichen.

Bevorzugt ist, wie oben erwähnt, der zweite Druck ein Zwischenblas- und/oder Fertigblasdruck, mit dem der Kunststoffvorformling beaufschlagt wird. So kann der Druck für das Expansionselement in einem vorgegebenen Zeitabschnitt an den Fertigblasdruck angepasst werden.

Die vorliegende Erfindung ist weiterhin auf eine Umformungseinrichtung zum Umformen von Kunststoffvorformlingen zu Kunststoffbehältnissen und insbesondere Kunststoffflaschen gerichtet. Diese Umformungseinrichtung weist eine Blasform auf, welche wiederum zwei Seitenteile aufweist, die in einem geschlossenen Zustand der Blasform einen Hohlraum ausbilden, innerhalb dessen die Kunststoffvorformlinge durch Beaufschlagung mit einem fließfähigen Medium expandierbar sind. Weiterhin weist die Vorrichtung eine Beaufschlagungseinrichtung auf, welche einem Innenraum der Kunststoffvorformlinge zu deren Expansion das gasförmige Medium zuführt, wobei die Seitenteile jeweils an Seitenteilträgern angeordnet sind, die zum Öffnen und Schließen der Blasform bezüglich einander bewegbar sind. Weiterhin weist die Vorrichtung ein durch ein gasförmiges Medium beaufschlagbares Expansionselement auf, welches bei der Beaufschlagung mit einem gasförmigen Medium bewirkt, dass ein Seitenteil auf das andere Seitenteil zugestellt bzw. zugedrängt bzw. in Richtung des anderen Seitenteils vorgespannt wird.

Erfindungsgemäß weist die Umformungseinrichtung eine Steuerungseinrichtung auf, welche eine Steuerung der Zufuhr des gasförmigen Mediums an das Expansionselement ermöglicht, wobei ein Druck des an das Expansionselement zugeführten Mediums veränderbar ist und wenigstens zeitweise unter dem maximalen Druck liegt, mit dem der Kunststoffvorformling beaufschlagt wird.

Es wird daher auch vorrichtungsseitig vorgeschlagen, dass der Druck, mit dem das Expansionselement bzw. das Druckkissen beaufschlagt wird, verändert wird, um dabei die oben erwähnten Vorteile zu erzielen. Vorteilhaft ist die Steuerungseinrichtung derart ausgeführt, dass das Expansionselement wenigstens zeitweise mit demjenigen Druck beaufschlagt wird, mit dem auch der Kunststoffvorformling beaufschlagt wird.

Bei einer bevorzugten Ausführungsform weist die Umformungseinrichtung ein erstes Reservoir auf, welches unter Druck stehendes, gasförmiges Medium bereitstellt und wenigstens zeitweise über eine Verbindungsleitung mit der Beaufschlagungseinrichtung verbunden ist. Bei diesem Reservoir kann es sich beispielsweise um einen Ringkanal handeln, der eine oder eine Vielzahl von Umformungsstationen mit dem gasförmigen Medium versorgt. Vorteilhaft weist die Vorrichtung mehrere derartiger Reservoirs auf, welche damit eine Beaufschlagung der Umformungseinrichtung mit unterschiedlichen Druckniveaus ermöglichen.

Bei einer vorteilhaften Ausführungsform weist die Umformungseinrichtung ein zweites Reservoir auf, welches unter Druck stehendes, gasförmiges Medium bereitstellt und welches wenigstens zeitweise über eine Verbindungsleitung mit dem Expansionselement verbunden ist. Es wird daher hier vorgeschlagen, dass ein eigenes Reservoir vorgesehen ist, über welches das Expansionselement mit dem gasförmigen Medium versorgt werden kann.

Bei einer weiteren vorteilhaften Ausführungsform weist die oben erwähnte Steuerungseinrichtung wenigstens ein erstes Ventil auf, über welches die Zuführung des gasförmigen Mediums an das Expansionselement steuerbar ist. Vorteilhaft hat jedoch dieses Ventil keinen Einfluss auf den eigentlichen Blasvorgang, sondern bevorzugt lediglich auf die Beaufschlagung des Expansionselements mit dem gasförmigen Medium.

Bei einer weiteren vorteilhaften Ausführungsform weist die Steuerungseinrichtung ein zweites Ventil auf, über welches die Zuführung des gasförmigen Mediums an das Expansionselement steuerbar ist, wobei vorzugsweise wenigstens eines der beiden Ventile ein Rückschlagventil ist. Vorteilhaft wäre es denkbar, dass die beiden genannten Ventile jeweils als Rückschlagventile ausgebildet sind.

Die vorliegende Erfindung ist weiterhin auf eine Anlage zum Umformen von Kunststoffvorformlingen zu Kunststoffflaschen bzw. Kunststoffbehältnissen gerichtet. Diese Anlage weist eine Vielzahl von Umformungseinrichtungen der oben beschriebenen Art auf, wobei diese Umformungseinrichtungen an einen gemeinsamen beweglichen Träger angeordnet sind. Vorteilhaft handelt es sich bei dem beweglichen Träger um einen drehbaren Träger und insbesondere um ein sogenanntes Blasrad. Vorteilhaft sind dabei die einzelnen Umformungseinrichtungen an einem Außenumfang dieses Trägers angeordnet.

Bei einer weiteren vorteilhaften Ausführungsform weist die Vorrichtung eine Zuführeinrichtung auf, welche die Kunststoffvorformlinge den einzelnen Umformungseinrichtungen zuführt. Vorteilhaft ist auch eine Abführeinrichtung vorgesehen, welche die Kunststoffvorformlinge von den Umformungseinrichtungen abführt.

Bei einer weiteren vorteilhaften Ausführungsform ist auch eine Erwärmungseinrichtung und insbesondere ein Ofen vorgesehen, der die Kunststoffvorformlinge vor der Zuführung an die einzelnen Umformungseinrichtungen erwärmt. Daneben kann auch eine Sterilisationseinrichtung vorgesehen sein, welche zum Sterilisieren der Kunststoffvorformlinge dient. Die Sterilisationseinrichtung kann dabei vor, in der oder nach der Erwärmungseinrichtung angeordnet sein. Bevorzugt ist die Sterilisationseinrichtung stromabwärts der Erwärmungseinrichtung angeordnet.

Weitere Vorteile und Ausführungsformen ergeben sich aus den beigefügten Zeichnungen. Darin zeigen:
- Fig. 1: Eine Ansicht einer Umformungseinrichtung zum Umformen von Kunststoffvorformlingen zu Kunststoffbehältnissen;
- Fig. 2: eine Teilansicht einer Hälfte der in Fig. 1 gezeigten Umformungseinrichtung;
- Fig. 3: eine Darstellung eines Seitenteilträgerteils;
- Fig. 4: eine blockdiagrammartige Darstellung einer erfindungsgemäßen Vorrichtung;
- Fig. 5: eine weitere blockdiagrammartige Darstellung einer erfindungsgemäßen Vorrichtung;
- Fig. 6: eine weitere blockdiagrammartige Darstellung einer erfindungsgemäßen Vorrichtung;
- Fig. 7: einen Verlauf der Druckes für das Expansionselement.

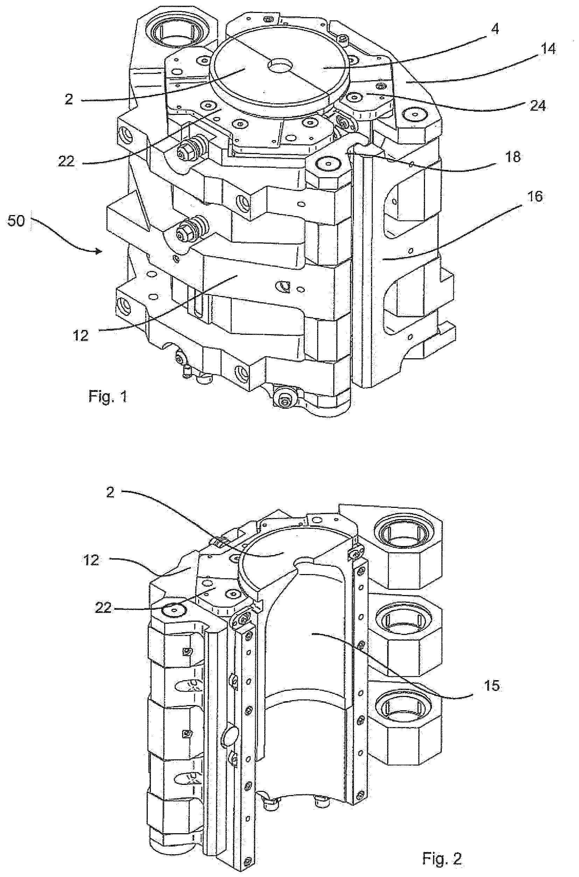

Fig. 1 zeigt eine Darstellung einer Umformungseinrichtung 50 zum Expandieren von Kunststoffvorformlingen zu Kunststoffbehältnissen. Diese Umformungseinrichtung weist dabei eine Blasform mit einem ersten Seitenteil 2 und einem zweiten Seitenteil 4 auf. Diese beiden Seitenteile können auseinander geklappt werden, um zwischen sich einen Kunststoffvorformling aufzunehmen und dann wieder zusammen geklappt werden, um diesen Kunststoffvorformling im Inneren der Blasform mit einem gasförmigen Medium und insbesondere mit Luft zu beaufschlagen. Das Bezugszeichen 12 bezieht sich auf einen ersten Seitenteilträger, der zum Tragen des Seitenteils 2 gedacht ist. Dabei ist an diesem Seitenteilträger 12 eine Blasformträgerschale 22 angeordnet, welche wiederum das Seitenteil 2 der Blasform aufnimmt.

Das Bezugszeichen 14 kennzeichnet einen zweiten Seitenteilträger, an den das zweite Seitenteil 4 ebenfalls über eine Blasformträgerschale 24 angeordnet ist. Diese beiden Seitenteilträger 12, 14 können bezüglich einer gemeinsamen Welle bzw. Achse zum Öffnen und Schließen der Blasform auseinander- und zusammengeschwenkt werden. Die Bezugszeichen 16 und 18 beziehen sich auf zwei Verriegelungselemente, welche dazu dienen, um die Blasform während des Expansionsvorgangs in einem geschlossenen Zustand zu halten. Dabei können die Verriegelungselemente um eine Achse schwenken, die sich auch in der gleichen Richtung erstreckt, wie auch die Achse der beiden Seitenteilträger 12, 14.

Fig. 2 zeigt eine Teilansicht bzw. eine Hälfte der in Fig. 1 gezeigten Umformungseinrichtung 50. Man erkennt hier wieder den Seitenteilträger 12, an dem über die Trägerschale 22 das Seitenteil 2 angeordnet ist. Weiterhin erkennt man auch einen Teil des Hohlraums 15, innerhalb dessen die Kunststoffvorformlinge zu den Kunststoffbehältnissen expandiert werden, dabei genauer gegen eine Wandung des Seitenteils 2 expandiert werden.

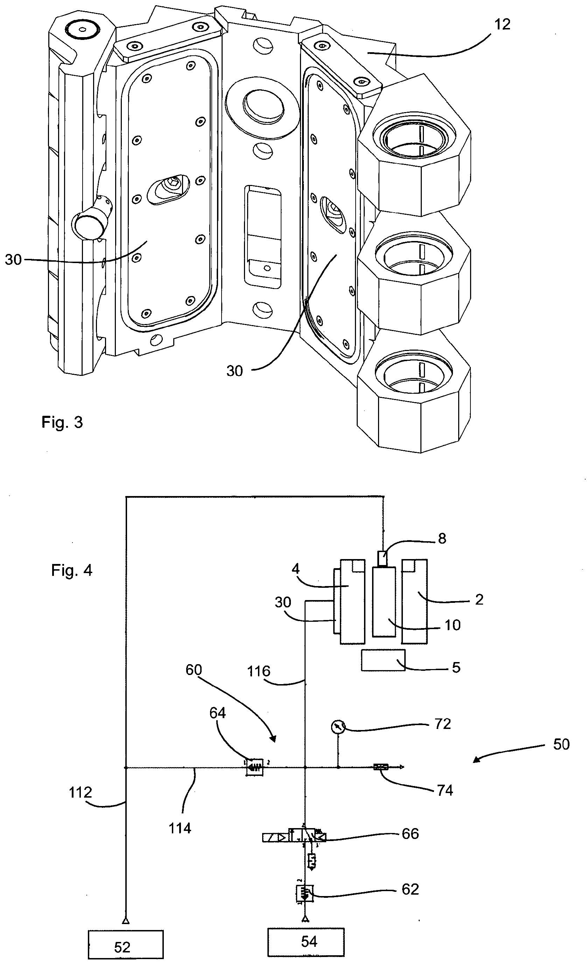

Fig. 3 zeigt eine Darstellung des Seitenteilträgers 12. Man erkennt dabei auch die Expansionselemente 30, die dazu dienen, um den Seitenteilträger 12 und das an diesen angeordnete Seitenteil auseinander zu drängen und damit das Seitenteil 2 auf das zweite Seitenteil 4 zuzudrängen. Bei der in Fig. 3 gezeigten Darstellung sind zwei derartige Expansionselemente vorgesehen, die damit bewirken, dass das an diesen angeordnete Seitenteil gleichmäßig in einer resultierenden Richtung gedrängt wird, hier in einer Richtung, die als Winkelhalbierende zwischen den beiden Expansionselementen verläuft.

Fig. 4 zeigt eine weitere Darstellung zur Veranschaulichung der erfindungsgemäßen Vorrichtung. Man erkennt hier wieder die beiden Seitenteile 2 und 4 und grob schematisch auch das Expansionselement 30, welches ebenfalls durch Druckluft beaufschlagbar ist. Das Bezugszeichen 10 kennzeichnet einen Kunststoffvorformling, der in die Blasform eingebracht werden kann und das Bezugszeichen 5 ein Bodenteil, welches die Blasform bzw. deren Hohlraum nach unten hin abschließt.

Das Bezugszeichen 52 kennzeichnet ein Reservoir, welches zur Beaufschlagung des Kunststoffvorformlings 10 mit Blasluft dient. Zu diesem Zwecke ist zwischen dem Reservoir 52 und dem Kunststoffvorformling bzw. einer Beaufschlagungseinrichtung wie einer Blasdüse, welche den Kunststoffvorformling beaufschlagt, eine Verbindungsleitung 112 vorgesehen.

Das Bezugszeichen 54 kennzeichnet ein weiteres Reservoir, welches zum Beaufschlagen des Expansionselements 30 mit Blasluft dient, wobei hierzu ebenfalls wieder eine Verbindungsleitung 116 vorgesehen ist.

Die Steuerung der Luftzufuhr an das Expansionselement erfolgt hier unter anderem mittels zwei Ventilen 62, 64, die als Rückschlagventile ausgebildet sind. Vor dem eigentlichen Expansionsvorgang ist das Rückschlagventil 62 geöffnet und ausgehend von dem Reservoir 54 gelangt Luft mit einem Druck von beispielsweise 5 bar zu dem Expansionselement 30.

Sobald der Blasdruck über ein bestimmtes Niveau ansteigt, gelangt er auch über das Rückschlagventil 64 zu dem Expansionselement. In diesem Falle ist es denkbar, dass durch eben diesen Druck das Rückschlagventil 62 geschlossen wird. Das Bezugszeichen 72 kennzeichnet eine Druckmesseinrichtung, welche den an dem Expansionselement 30 anliegenden Druck misst. Das Bezugszeichen 74 kennzeichnet eine Auslasseinrichtung wie etwa eine Drossel. Über ein weiteres Ventil 66 ist vorteilhaft der dem Druckkissen bzw. Expansionselement 30 zuführbare Druck steuerbar und insbesondere zu- oder abschaltbar. Dabei kann hier auch eine Druckkissenminderung (DKM) vorgesehen sein. Das Bezugszeichen 60 kennzeichnet die Steuerungseinrichtung, welche die Druckbeaufschlagung des Expansionselementes steuert. Die oben genannten Ventile sind Bestandteile dieser Steuerungseinrichtung 60. Das Bezugszeichen 8 kennzeichnet eine (nur grob schematisch dargestellte) Beaufschlagungseinrichtung wie etwa eine Blasdüse, welche die Kunststoffvorformlinge 10 mit dem gasförmigen Medium beaufschlagt.

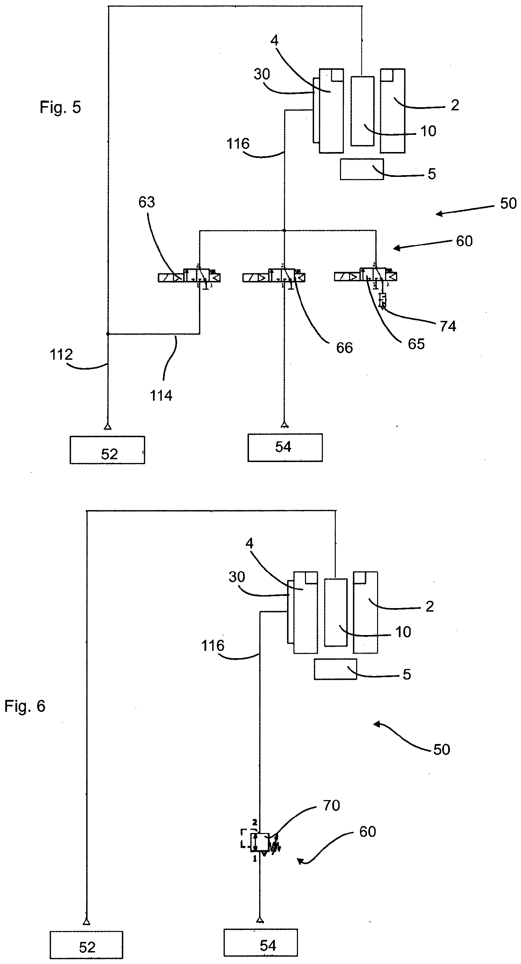

Fig. 5 zeigt eine weitere Darstellung einer erfindungsgemäßen Anordnung. Die Darstellung der eigentlichen Umformungsstation entspricht hier der in Fig. 4 gezeigten Darstellung. Anders sind jedoch hier drei steuerbare Ventile 63, 66 und 65 vorgesehen, über welche die Druckzuführung an die Umformungseinrichtung 50 gesteuert werden kann. Das Bezugszeichen 65 bezieht sich auf ein Ventil, welches der Entlüftung dient. Das Ventil 66 kann die Zuführung von Druckluft aus dem Reservoir 54 steuern und das Bezugszeichen 63 bezeichnet ein Ventil, welches die Zuführung aus dem Reservoir 52, welches auch die Blasluft zuführt, steuern kann. Durch entsprechende Beschaltung der Ventile kann festgelegt werden, zu welchem Zeitpunkt keine Druckversorgung des Expansionselements erfolgt, zu welchen Zeitpunkten oder Zeiträumen eine Zuführung von Luft aus dem Reservoir 54 (mit dem geringeren Druck) erfolgt und zu welchen Zeiträumen die Zuführung aus dem Reservoir 52 erfolgt.

Fig. 6 zeigt eine weitere erfindungsgemäße Anordnung. Hier erfolgt die Steuerung der Luft, die dem Expansionselement 30 zugeführt wird, ausschließlich über ein Ventil 70, bei dem es sich insbesondere, aber nicht ausschließlich, um ein sogenanntes Proportionalventil handeln kann.

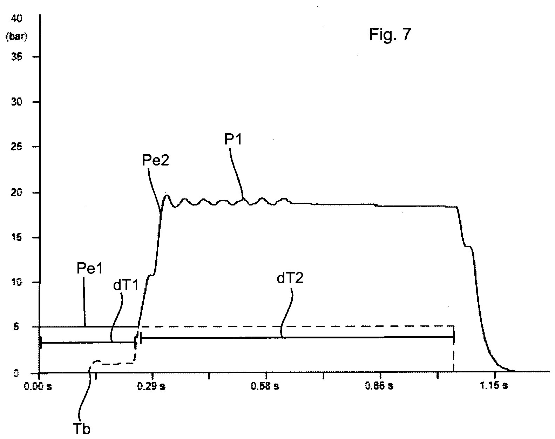

Fig. 7 zeigt einen Druckverlauf für das Expansionselement. Dabei ist eine Druckkurve P1 dargestellt, welche den Druck bei der Beaufschlagung der Kunststoffvorformlinge während des Expansionsvorgangs darstellt. Die Kunststoffvorformlinge werden dabei zunächst mit einem Vorblasdruck beaufschlagt, anschließend mit einem Zwischenblasdruck und schließlich mit einem Fertigblasdruck, der über einen vorgegebenen Zeitraum gehalten wird, um das Behältnis auszuformen und um es in diesem ausgeformten Zustand zu halten. Das Bezugszeichen Tb kennzeichnet den Zeitpunkt, zu dem der Expansionsvorgang bzw. die Druckbeaufschlagung des Kunststoffvorformlings einsetzt.

Die Bezugszeichen Pe1 und Pe2 veranschaulichen zwei Abschnitte des Druckverlaufs, mit dem das Expansionsmittel beaufschlagt wird. In einem ersten Zeitraum dT1 wird das Expansionselement 30 mit einem ersten vorgegebenen Druck Pe1 beaufschlagt, der hier bevorzugt konstant ist und bei bis zu 7 bar, bevorzugt bei ca. 5 bar liegt. In dem zweiten vorgegebenen Abschnitt dT2 wird an das Expansionselement 30 ein Druck Pe2 angelegt, der an den Druck P1 angepasst ist bzw. diesem entspricht. Die Beaufschlagung des Expansionselement mit dem Druck Pe2 wird hier wieder eingestellt, sobald auch der Druck auf den Kunststoffvorformling sich absenkt, also der Kunststoffvorformling wieder entlastet wird. Es wäre jedoch auch möglich, den Druck auf das Expansionsmittel bis zur vollständigen Beendigung des Expansionsprozesses aufrecht zu erhalten. Im Abschnitt dT2 folgt der Druckverlauf im Expansionselement 30 im Wesentlichen dem Druck, der für die Beaufschlagung bzw. Ausformung der Kunststoffvorformlinge zu Kunststoffbehältnissen aufgebracht wird. Sobald der Druck im Abschnitt dT2 den Druck im Abschnitt dT1 übersteigt, folgt der Druckverlauf im Expansionselement dem Druckverlauf des Abschnitts dT2. Sobald der Druck im Abschnitt dT2 geringer wird als der Druck im Abschnitt dT1, folgt der Druckverlauf im Expansionselement dem des ersten Abschnitts dT1.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind.

### Bezugszeichenliste

- 50: Umformungseinrichtung
- 2: erstes Seitenteil
- 4: zweites Seitenteil
- 5: Bodenteil
- 8: Beaufschlagungseinrichtung
- 10: Kunststoffvorformling
- 12: erster Seitenteilträger
- 14: zweiter Seitenteilträger
- 15: Hohlraum
- 16, 18: Verriegelungselemente
- 22: erste Blasformträgerschale
- 24: zweite Blasformträgerschale
- 30: Expansionselemente
- 52: Reservoir
- 54: weiteres Reservoir
- 62: Rückschlagventile
- 63: steuerbares Ventil
- 64: weiteres Rückschlagventil
- 65: steuerbares Ventil
- 66: weiteres Ventil / steuerbares Ventil
- 70: Ventil / Proportionalventil
- 72: Druckmesseinrichtung
- 74: Auslasseinrichtung

- 112: Verbindungsleitung
- 116: weitere Verbindungsleitung
- Pe1, Pe2: Abschnitte der Druckbeaufschlagung
- dT1, dT2: zeitliche Abschnitte der Druckbeaufschlagung
- Tb: Zeitpunkt des Beginns der Druckbeaufschlagung des Kunststoffvorformlings

## Patentansprüche

1. Verfahren zum Umformen von Kunststoffvorformlingen (10), wobei die Kunststoffvorformlinge (10) in eine Blasform eingebracht werden und durch die Beaufschlagung mit einem fließfähigen Medium, welches in einen Innenraum der Kunststoffvorformlinge (10) eingebracht wird, expandiert werden, wobei die Blasform wenigstens zwei Seitenteile (2, 4) aufweist, welche während der Expansion der Kunststoffvorformlinge einen Hohlraum ausbilden, innerhalb dessen die Kunststoffbehältnisse expandiert werden, wobei diese Seitenteile (2, 4) jeweils an Seitenteilträgern (12, 14) angeordnet sind, welche zum Öffnen und Schließen der Blasform bezüglich einander bewegt werden und wobei wenigstens eine Anordnung aus einem Seitenteilträger (12, 14) und dem daran angeordneten Seitenteil (2, 4) ein durch ein gasförmiges Medium beaufschlagbares Expansionselement (30) aufweist, welches bei Beaufschlagung mit dem gasförmigen Medium bewirkt, dass ein Seitenteil (2, 4) auf das andere Seitenteil (4, 2) zugestellt wird, wobei während der Expansion der Kunststoffvorformlinge (10) diese mit wenigstens zwei unterschiedlichen Druckniveaus beaufschlagt werden und wobei diese Beaufschlagung des Kunststoffvorformlings (10) zu einem vorgegebenen Zeitpunkt (Tb) einsetzt,
**dadurch gekennzeichnet, dass**
das Expansionselement während eines ersten zeitlichen Abschnitts (dT1) des Expansionsvorgangs mit einem ersten Druck (Pe1) beaufschlagt wird und während eines zweiten zeitlichen Abschnitts (dT2), der zeitlich nach dem ersten Abschnitt (dT1) liegt, mit einem zweiten Druck (Pe2) beaufschlagt wird, der größer ist als der erste Druck (Pe1), wobei der erste Druck bevorzugt wenigstens zeitweise von dem momentanen Druck, mit dem der Kunststoffvorformling beaufschlagt wird, abweicht.

2. Verfahren nach Anspruch 1,
**dadurch gekennzeichnet, dass**
der erste Druck (Pe1) geringer ist als der zweite Druck (Pe2).

3. Verfahren nach Anspruch 1,
**dadurch gekennzeichnet, dass**
das Expansionselement (30) bereits vor dem Beaufschlagen des Kunststoffvorformlings (10) mit Druck beaufschlagt wird.

4. Verfahren nach wenigstens einem der vorangegangenen Ansprüche,
**dadurch gekennzeichnet, dass**
der erste Druck zwischen 2bar und 25bar, bevorzugt zwischen 3bar und 20bar, bevorzugt zwischen 3bar und 15bar, bevorzugt zwischen 4bar und 10bar liegt.

5. Verfahren nach wenigstens einem der vorangegangenen Ansprüche,
**dadurch gekennzeichnet, dass**
der zweite Druck ein Zwischenblas- und/oder Fertigblasdruck ist, mit dem der Kunststoffvorformling beaufschlagt wird.

6. Umformungseinrichtung (50) zum Umformen von Kunststoffvorformlingen (10) mit einer Blasform (2, 4), welche zwei Seitenteile (2, 4) aufweist, die in einem geschlossenen Zustand der Blasform (2, 4) einen Hohlraum (15) ausbilden, innerhalb dessen die Kunststoffvorformlinge (10) durch Beaufschlagung mit einem fließfähigen Medium expandierbar sind, mit einer Beaufschlagungseinrichtung, welche einem Innenraum der Kunststoffvorformlinge (10) zu deren Expansion das gasförmige Medium zuführt, wobei die Seitenteile (2, 4) jeweils an Seitenteilträgern (12, 14) angeordnet sind, die zum Öffnen und Schließen der Blasform bezüglich einander bewegbar sind und wobei die Vorrichtung (50) ein durch ein gasförmiges Medium beaufschlagbares Expansionselement (30) aufweist, welches bei Beauschlagung mit einem gasförmigen Medium bewirkt, dass ein Seitenteil (2, 4) auf das andere Seitenteil (4, 2) zugedrängt wird,
**dadurch gekennzeichnet, dass**
die Umformungseinrichtung eine Steuerungseinrichtung (60) aufweist, welche eine Steuerung der Zufuhr des gasförmigen Mediums an das Expansionselement ermöglicht, wobei ein Druck des an das Expansionselement (30) zugeführten Mediums veränderbar ist und wenigstens zeitweise unter dem maximalen Druck liegt, mit dem der Kunststoffvorformling (10) beaufschlagt wird.

7. Umformungseinrichtung (50) nach Anspruch 6,
**dadurch gekennzeichnet, dass**
die Umformungseinrichtung ein erstes Reservoir (52) aufweist, welches unter Druck stehendes gasförmiges Medium bereitstellt und welches wenigstens zeitweise über eine Verbindungsleitung (112) mit der Beaufschlagungseinrichtung verbunden ist.

8. Umformungseinrichtung (50) nach Anspruch 7,
**dadurch gekennzeichnet, dass**
die Umformungseinrichtung (50) ein zweites Reservoir (54) aufweist, welches unter Druck stehendes gasförmiges Medium bereitstellt und welches wenigstens zeitweise über eine Verbindungsleitung (116) mit dem Expansionselement (30) verbunden ist.

9. Umformungseinrichtung (50) nach wenigstens einem der vorangegangenen Ansprüche 6 - 8,
**dadurch gekennzeichnet, dass**
die Steuerungseinrichtung (60) wenigstens ein erstes Ventil (62) aufweist, über welches die Zuführung des gasförmigen Mediums an das Expansionselement (30) steuerbar ist.

10. Umformungseinrichtung (50) nach Anspruch 9,
**dadurch gekennzeichnet, dass**
das erste Ventil ein Proportionalventil ist.

11. Umformungseinrichtung (50) nach Anspruch 9,
**dadurch gekennzeichnet, dass**
die Steuerungseinrichtung (60) ein zweites Ventil (64) aufweist, über welches die Zuführung des gasförmigen Mediums an das Expansionselement steuerbar ist, wobei bevorzugt wenigstens ein Ventil (62, 64) ein Rückschlagventil ist.

12. Anlage zum Umformen von Kunststoffvorformlingen zu Kunststoffflaschen mit einer Vielzahl von Umformungseinrichtungen (50) nach wenigstens einem der vorangegangenen Ansprüche 6 - 11, wobei diese Umformungseinrichtungen (50) an einem gemeinsamen beweglichen Träger angeordnet sind.

## Claims

1. A method for moulding plastic preforms (10), wherein the plastic preforms (10) are introduced into a blow mould and are expanded by applying a flowable medium thereto, which is introduced into the internal space of the plastic preforms (10), wherein said blow mould includes at least two lateral parts (2, 4) which form a cavity during the expansion of the plastic preforms, within which the plastic containers are expanded, wherein said lateral parts (2, 4) are respectively provided on lateral part carriers (12, 14) that are moved relative to each other for opening and closing the blow mould, and wherein at least one arrangement of a lateral part carrier (12, 14) and the lateral part (2, 4) provided thereon has an expansion element (30) that can have a gaseous medium applied thereto, which expansion element ensures, when the gaseous medium is applied thereto, that one lateral part (2, 4) is moved towards the other lateral part (4, 2), wherein during the expansion of the plastic preforms (10), at least two different pressure levels are applied to the latter, and wherein this application of pressure onto the plastic preform (10) is started at a predetermined point in time (Tb),
**characterised in that**
a first pressure (Pe1) is applied to said expansion element during a first time section (dT1) of said expansion process and a second pressure (Pe2) that is greater than said first pressure (Pe1) is applied during a second time section (dT2) that follows in time after the first section (dT1), wherein the first pressure deviates, preferably at least at times, from the instantaneous pressure that is applied onto the plastic preform.

2. The method as claimed in claim 1,
**characterised in that**
the first pressure (Pe1) is lower than the second pressure (Pe2).

3. The method as claimed in claim 1,
**characterised in that**
the pressure is already applied to the expansion element (30) prior to pressure being applied to the plastic preform (10).

4. The method as claimed in at least one of the preceding claims,
**characterised in that**
the first pressure is between 2 bar and 25 bar, preferably between 3 bar and 20 bar, preferably between 3 bar and 15 bar, preferably between 4 bar and 10 bar.

5. The method as clamed in at least one of the preceding claims, **characterised in that**
the second pressure is an intermediate and/or final blowing pressure that is applied onto the plastic preform.

6. A moulding unit (50) for moulding plastic preforms (10) using a blow mould (2, 4) that includes two lateral parts (2, 4) which in a closed condition of said blow mould (2, 4) form a cavity (15), within which cavity the plastic preforms (10) can be expanded by applying a flowable medium thereto using an application unit that supplies the gaseous medium into the internal space of the plastic preforms (10) for the expansion thereof, wherein the lateral parts (2, 4) are each provided on lateral part carriers (12, 14) which can be moved relative to each other for opening and closing the blow mould, and wherein the apparatus (50) has an expansion element (30) that can have a gaseous medium applied thereto, which expansion element ensures, when a gaseous medium is applied thereto, that a lateral part (2, 4) is urged towards the other lateral part (4, 2),
**characterised in that**
the moulding unit includes a control unit (60) that allows the supply of the gaseous medium to the expansion element to be controlled, wherein a pressure of the medium supplied to the expansion element (30) can be modified and is, at least at times, below the maximum pressure that is applied to the plastic preform (10).

7. The moulding unit (50) as claimed in claim 6,
**characterised in that**
the moulding unit includes a first reservoir (52) that provides pressurised gaseous medium and that is, at least at times, connected to the application unit via a connection line (112).

8. The moulding unit (50) as claimed in claim 7,
**characterised in that**
the moulding unit (50) includes a second reservoir (54) which provides pressurised gaseous medium and which is connected, at least at times, to the expansion element (30) via a connection line (116).

9. The moulding unit (50) as claimed in at least one of the preceding claims 6 - 8, **characterised in that**
said control unit (60) includes at least one first valve (62), via which the supply of the gaseous medium to said expansion element (30) can be controlled.

10. The moulding unit (50) as claimed in claim 9,
**characterised in that**
the first valve is a proportional valve.

11. The moulding unit (50) as claimed in claim 9,
**characterised in that**
said control unit (60) includes a second valve (64), via which the supply of the gaseous medium to the expansion element can be controlled, wherein preferably at least one valve (62, 64) is a check valve.

12. A system for moulding plastic preforms into plastic bottles, comprising a plurality of moulding units (50) as claimed in at least one of the preceding claims 6 - 11, wherein said moulding units (50) are disposed on a common movable carrier.

## Revendications

1. Procédé de mise en forme d'ébauches en matière plastique (10), dans lequel les ébauches en matière plastique (10) sont introduites dans un moule de soufflage et sont mises en expansion par soumission à l'action d'un milieu coulant, lequel est introduit dans un espace intérieur des ébauches en matière plastique (10), dans lequel le moule de soufflage comprend au moins deux parties latérales (2, 4), lesquelles constituent pendant l'expansion des ébauches en matière plastique une cavité à l'intérieur de laquelle les ébauches en matière plastique sont mises en expansion, dans lequel ces parties latérales (2, 4) sont agencées chacune sur des supports (12, 14) de partie latérale, lesquels sont déplacés les uns par rapport aux autres pour ouvrir et fermer le moule de soufflage, et dans lequel au moins un ensemble composé d'un support (12, 14) de partie latérale et de la partie latérale (2, 4) agencée dessus comprend un élément expansible (30) qui peut être soumis à l'action d'un milieu gazeux et qui, lorsqu'il est soumis à l'action du milieu gazeux, a pour effet qu'une partie latérale (2, 4) est avancée vers l'autre partie latérale (4, 2), dans lequel les ébauches en matière plastique (10), pendant leur expansion, sont soumises à l'action d'au moins deux niveaux de pression différents et dans lequel cette soumission de l'ébauche en matière plastique (10) est initiée à un moment (Tb) prédéfini,
**caractérisé en ce que**
l'élément expansible est soumis à l'action d'une première pression (Pe1) pendant un premier intervalle de temps (dT1) et, pendant un deuxième intervalle de temps (dT2) succédant au premier intervalle de temps (dT1), à une deuxième pression (Pe2) qui est supérieure à la première pression (Pe1), dans lequel la première pression est de préférence au moins temporairement différente de la pression momentanée à l'action de laquelle l'ébauche en matière plastique est soumise.

2. Procédé selon la revendication 1,
**caractérisé en ce que**
la première pression (Pe1) est inférieure à la deuxième pression (Pe2).

3. Procédé selon la revendication 1,
**caractérisé en ce que**
l'élément expansible (30) est déjà soumis à l'action d'une pression avant la soumission de l'ébauche en matière plastique (10).

4. Procédé selon au moins l'une des revendications précédentes, **caractérisé en ce que**
la première pression est comprise entre 2 bar et 25 bar, de préférence entre 3 bar et 20 bar, de préférence entre 3 bar et 15 bar, de préférence entre 4 bar et 10 bar.

5. Procédé selon au moins l'une des revendications précédentes, **caractérisé en ce que**
la deuxième pression est une pression de soufflage intermédiaire et/ou de soufflage final, à l'action de laquelle l'ébauche en matière plastique est soumise.

6. Dispositif de mise en forme (50) servant à la mise en forme d'ébauches en matière plastique (10), comprenant un moule de soufflage (2, 4), lequel présente deux parties latérales (2, 4) qui, une fois le moule de soufflage (2, 4) fermé, constituent une cavité (15) à l'intérieur de laquelle les ébauches en matière plastique (10) peuvent être mises en expansion par soumission à l'action d'un milieu coulant, un dispositif d'application, lequel amène le milieu gazeux à un espace intérieur des ébauches en matière plastique (10) pour les faire se mettre en expansion, dans lequel les parties latérales (2, 4) sont agencées chacune sur des supports (12, 14) de partie latérale qui peuvent être déplacés les uns par rapport aux autres pour ouvrir et fermer le moule de soufflage, et dans lequel le dispositif (50) comprend un élément expansible (30) qui peut être soumis à l'action d'un milieu gazeux et qui, lorsqu'il est soumis à l'action du milieu gazeux, a pour effet qu'une partie latérale (2, 4) est poussée vers l'autre partie latérale (4, 2),
**caractérisé en ce que**
le dispositif de mise en forme comprend un dispositif de commande (60) qui permet de commander l'amenée du milieu gazeux à l'élément expansible, dans lequel une pression du milieu amené à l'élément expansible (30) peut être modifiée et est au moins temporairement inférieure à la pression maximale à l'action de laquelle l'ébauche en matière plastique (10) est soumise.

7. Dispositif de mise en forme (50) selon la revendication 6,
**caractérisé en ce que**
le dispositif de mise en forme comprend un premier réservoir (52), lequel fournit un milieu gazeux sous pression et lequel est relié au moins temporairement au dispositif d'application par une conduite de raccordement (112).

8. Dispositif de mise en forme (50) selon la revendication 7,
**caractérisé en ce que**
le dispositif de mise en forme (50) comprend un deuxième réservoir (54), lequel fournit un milieu gazeux sous pression et lequel est relié au moins temporairement à l'élément expansible (30) par l'intermédiaire d'une conduite de raccordement (116).

9. Dispositif de mise en forme (50) selon au moins l'une des revendications précédentes 6 à 8,
**caractérisé en ce que**
le dispositif de commande (60) comprend au moins une première soupape (62) permettant de commander l'amenée du milieu gazeux à l'élément expansible (30).

10. Dispositif de mise en forme (50) selon la revendication 9,
**caractérisé en ce que**
la première soupape est une soupape proportionnelle.

11. Dispositif de mise en forme (50) selon la revendication 9,
**caractérisé en ce que**
le dispositif de commande (60) comprend une deuxième soupape (64) permettant de commander l'amenée du milieu gazeux à l'élément expansible, dans lequel au moins une soupape (62, 64) est de préférence une soupape anti-retour.

12. Installation servant à la transformation d'ébauches en matière plastique en bouteilles en matière plastique, comprenant une pluralité de dispositifs de mise en forme (50) selon au moins l'une des revendications précédentes 6 à 11, dans laquelle ces dispositifs de mise en forme (50) sont agencés sur un support mobile commun.
